# EUROPEAN PATENT APPLICATION

(11) **EP 4 835 634 A1**
(43) Date of publication of application: **04.11.2026**
(21) Application number: 24910961.2
(22) Date of filing: 20.12.2024
(51) Int. Cl.: G06F 3/0481, G06F 3/0484

(54) **CONVERSATION INTERFACE INTERACTION METHOD AND APPARATUS, ELECTRONIC DEVICE, AND STORAGE MEDIUM**

(30) Priority: 29.12.2023 CN 202311869307
(71) Applicant: Beijing Zitiao Network Technology Co., Ltd., Beijing 100190 (CN)
(72) Inventor: ZHANG, Chengcheng, Beijing 100028 (CN); SUN, Yuze, Beijing 100028 (CN)
(74) Representative: Grünecker Patent- und Rechtsanwälte PartG mbB
(86) International application number: PCT/CN2024/140961
(87) International publication number: WO 2025/140032

(57) **Abstract**

Embodiments of the present disclosure provide a chat interface interaction method and apparatus, an electronic device, and a storage medium. The method includes displaying a chat interface of a target chat; and displaying an answering interface in response to an answering operation based on the chat interface, where the answering interface is used for answering questions.

## Description

### CROSS-REFERENCE TO RELATED APPLICATION(S)

This application claims priority to Chinese Patent Application No. 202311869307.0, filed on December 29, 2023, and entitled "CHAT INTERFACE INTERACTION METHOD AND APPARATUS, ELECTRONIC DEVICE, AND STORAGE MEDIUM", which is incorporated herein by reference in its entirety.

### TECHNICAL FIELD

Embodiments of the present disclosure relate to the field of computer technologies, and in particular, to a chat interface interaction method and apparatus, an electronic device, and a storage medium.

### BACKGROUND

With the rapid development of the Internet, more and more users interact through terminal devices, for example, communicate through a chat interface.

### SUMMARY

Embodiments of the present disclosure provide a chat interface interaction method and apparatus, an electronic device, and a storage medium.

According to a first aspect, an embodiment of the present disclosure provides a chat interface interaction method.

The chat interface interaction method, including:
displaying a chat interface of a target chat; and
displaying an answering interface in response to an answering operation based on the chat interface, where the answering interface is used for answering questions.

According to a second aspect, an embodiment of the present disclosure further provides a chat interface interaction apparatus. The apparatus includes:
a chat interface display module, configured to display a chat interface of a target chat; and
an answering interface display module, configured to display an answering interface in response to an answering operation based on the chat interface, where the answering interface is used for answering questions.

According to a third aspect, an embodiment of the present disclosure further provides an electronic device. The electronic device includes:
one or more processors; and
a memory, configured to store one or more programs,
where the one or more programs, when executed by the one or more processors, cause the one or more processors to implement the chat interface interaction method according to the embodiment of the present disclosure.

According to a fourth aspect, an embodiment of the present disclosure further provides a computer-readable storage medium having a computer program stored thereon that, when executed by a processor, causes the chat interface interaction method according to the embodiment of the present disclosure to be implemented.

### BRIEF DESCRIPTION OF THE DRAWINGS

The foregoing and other features, advantages, and aspects of the embodiments of the present disclosure become more apparent with reference to the following specific implementations and in conjunction with the drawings. Throughout the drawings, the same or similar reference numerals denote the same or similar elements. It should be understood that the drawings are schematic and that parts and elements are not necessarily drawn to scale.
Fig. 1a is a schematic flowchart of a chat interface interaction method according to an embodiment of the present disclosure;
Fig. 1b is a schematic diagram of a chat interface according to an embodiment of the present disclosure;
Fig. 1c is a schematic diagram of a chat interface according to an embodiment of the present disclosure;
Fig. 2a is a schematic flowchart of another chat interface interaction method according to an embodiment of the present disclosure;
Fig. 2b is a schematic diagram of an answering initiating panel according to an embodiment of the present disclosure;
Fig. 2c is a schematic diagram of a personal answering panel according to an embodiment of the present disclosure;
Fig. 2d is a schematic diagram of a team building card according to an embodiment of the present disclosure;
Fig. 2e is a schematic diagram of a team answering interface according to an embodiment of the present disclosure;
Fig. 3 is a schematic diagram of a structure of a chat interface interaction apparatus according to an embodiment of the present disclosure; and
Fig. 4 is a schematic diagram of a structure of an electronic device according to an embodiment of the present disclosure.

### DETAILED DESCRIPTION OF EMBODIMENTS

The embodiments of the present disclosure are described in more detail below with reference to the drawings. Although some embodiments of the present disclosure are shown in the drawings, it should be understood that the present disclosure may be implemented in various forms and should not be construed as limited to the embodiments set forth herein. Instead, these embodiments are provided for a more thorough and complete understanding of the present disclosure. It should be understood that the drawings and embodiments of the present disclosure are only for exemplary purposes and are not intended to limit the protection scope of the present disclosure.

It should be understood that steps described in method implementations of the present disclosure may be performed in different orders and/or in parallel. In addition, the method implementations may include additional steps and/or omit performing the illustrated steps. The scope of the present disclosure is not limited in this respect.

The term "include/comprise" and the variants thereof used herein are open-ended inclusions, that is, "include/comprise but not limited to". The term "based on" is "at least partially based on". The term "an embodiment" represents "at least one embodiment". The term "another embodiment" represents "at least one another embodiment". The term "some embodiments" represents "at least some embodiments". Related definitions of the other terms are given in the description below.

It should be noted that concepts such as "first" and "second" mentioned in the present disclosure are only used to distinguish between different apparatuses, modules, or units, and are not used to limit the sequence of functions performed by these apparatuses, modules, or units or interdependence therebetween.

It should be noted that the modifiers "a" and "a plurality of" mentioned in the present disclosure are illustrative rather than restrictive, and those skilled in the art should understand that "a" and "a plurality of" should be understood as "one or more" unless otherwise clearly indicated in the context.

The names of messages or information exchanged between a plurality of apparatuses in the implementations of the present disclosure are only for illustrative purposes, and are not intended to limit the scope of these messages or information.

It may be understood that before the technical solutions disclosed in the embodiments of the present disclosure are used, the user should be informed of the type, range of use, use scenarios, etc., of personal information involved in the present disclosure and the authorization of the user should be obtained in an appropriate manner in accordance with relevant laws and regulations.

For example, in response to receiving an active request from a user, prompt information is sent to the user to clearly prompt the user that the requested operation will require access to and use of personal information of the user. In this way, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to receiving the active request from the user, the prompt information may be sent to the user in the form of, for example, a pop-up window, in which the prompt information may be presented in text. In addition, the pop-up window may also include a selection control for the user to choose whether to "agree" or "disagree" to provide the personal information to the electronic device.

It may be understood that the above process of notifying and obtaining user authorization is only illustrative and does not limit the implementations of the present disclosure, and other manners that satisfy the relevant laws and regulations may also be applied to the implementations of the present disclosure.

It may be understood that the data involved in the technical solution (including but not limited to the data itself, acquisition or use of the data) should comply with requirements of corresponding laws, regulations, and related provisions.

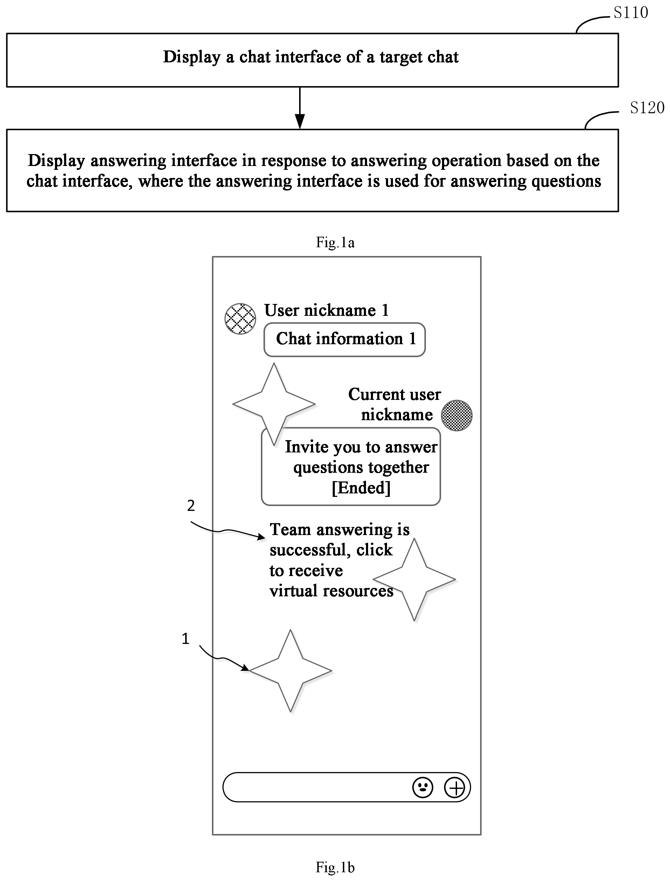

Fig. 1a is a schematic flowchart of a chat interface interaction method according to an embodiment of the present disclosure. The method is applicable to the case of interacting at a chat interface. The method may be executed by a chat interface interaction apparatus, where the apparatus may be implemented in software and/or hardware and is generally integrated on an electronic device. In this embodiment, the electronic device includes but is not limited to a computer, a mobile phone, a tablet computer, or other devices.

As shown in Fig. 1a, the chat interface interaction method provided by the embodiment of the present disclosure includes the following steps.

S110: a chat interface of a target chat is displayed.

The target chat may refer to a chat between a user and one or more other users in an application, for example, a group chat or a chat between two users. The chat interface may be an interface corresponding to the target chat. The specific content of the chat interface is not limited. For example, one or more chat information items in the target chat may be displayed on the chat interface, and the chat interface may also include one or more interactive controls to facilitate interaction between users.

In this embodiment, the chat interface of the target chat may be displayed to execute subsequent interface interaction.

S120: an answering interface is displayed in response to an answering operation based on the chat interface, where the answering interface is used for answering questions.

The answering operation may be considered as an operation of displaying the answering interface, for example, an operation of clicking a preset control. For example, the preset control may be a quick function entry displayed in an area other than a message display area on the chat interface, or may be an operation of executing a preset gesture on the chat interface. The preset gesture may be a gesture set in advance or the like. It may be understood that in the case that a preset condition is satisfied, the answering operation may be supported on the chat interface. For example, in the case that a time condition is satisfied, the answering interface may be displayed while the chat interface is opened through a preset entry. Further, different answering operations may correspond to different answering interfaces. The answering interface may be used for answering questions. For example, the answering interface may be used by a user to answer questions alone or may be used by a plurality of users in the target chat to answer questions in a team. In addition, after the answering time of the currently displayed question information ends, the chat interface may also be used to display the correct answer corresponding to the question information.

Specifically, in this embodiment, the answering interface may be displayed in response to the answering operation based on the chat interface. For example, the user may click an answering control on the chat interface to execute the answering operation, or the answering operation may be executed in a panel based on the chat interface to trigger the display of the panel. Thus, after identifying the answering operation, the current application may display the answering interface for the current user to answer questions subsequently.

In some embodiments, displaying the answering interface includes:
displaying preset question information, where the preset question information is determined based on a preset question database or a preset theme.

The preset question information may be understood as question information set in advance, for example, question information sent by a platform. The preset question information may be determined based on a preset question database or a preset theme. For example, the preset question information may be randomly selected from the preset question database, and the preset question database includes a plurality of candidate question information items for the user to answer questions. The preset question information may also be determined based on the preset theme. The preset theme may be a theme set in advance, such as a festival theme and/or a weather theme. Exemplarily, when a certain day is the Major Snow solar term, the preset question information may be question information related to snow, and so on.

In some embodiments, after displaying the answering interface, the method further includes:
displaying first result prompt information in response to an answer operation for current question information displayed in the answering interface, where the first result prompt information is used for prompting whether a current user answers the question correctly; and/or
displaying second result prompt information in response to a case that the current user does not execute the answer operation for the current question information within a preset duration, where the second result prompt information is used for prompting that the current user answers the question incorrectly.

The current question information may be considered as question information that is currently answered, and for example, may include a question and a plurality of candidate options or an answer content input area. The answer operation may be an operation in which the current user answers the current question information, for example, an operation of selecting a candidate option or an operation of inputting answer content for the current question information. The first result prompt information may be used for prompting whether the current user answers the question correctly. For example, different display styles may be used to distinguish different answering results. For example, a green user interface (UI) may be used to prompt that the current user answers the question correctly, and a red UI may be used to prompt that the current user answers the question incorrectly. The preset duration may be a preset time length for the current user to answer questions, which is set by related personnel according to the actual situation. The second result prompt information may be used for prompting that the current user answers the question incorrectly.

In some implementations, the current user may answer questions based on the question information on the answering interface. The number of question information items is not limited, and the maximum number of questions may support configuration, for example, may be 10 questions or 12 questions. The answer time for each question may be a preset duration, for example, 10 s. That is, the current user may execute the answer operation for the current question information within the countdown of 10 s. Thus, in this embodiment, whether the current user answers the question correctly may be determined immediately after the current user executes the answer operation or in response to the answer operation after the countdown ends, and the first result prompt information is displayed. Alternatively, if the current user does not execute the answer operation for the current question information within the countdown of 10 s, in this embodiment, it may be determined that the current user answers the question incorrectly in response to this case, and the second result prompt information is displayed.

In some implementations, exemplarily, the current user may click a preset position or a preset control on the answering interface to collapse the question information. In addition, if the current user clicks to select a candidate option within the countdown of 10 s, the current user may click another candidate option to modify the answer, or click the candidate option again to cancel the selection state. After a candidate option is selected, the other users who answer the questions in the group may view the selection in real time. At the end of the countdown, all the users cannot modify the answers, and the correct or wrong feedback (that is, the first result prompt information or the second result prompt information) is displayed and stays for 3 s. Therefore, different display operations may be executed based on different answering situations.

According to the chat interface interaction method provided by the embodiment of the present disclosure, the chat interface of the target chat is displayed, and the answering interface is displayed in response to the answering operation based on the chat interface, where the answering interface is used for answering questions. By using the method, the answering interface is displayed in response to the answering operation based on the chat interface, so that answering interaction on the chat interface may be implemented, and the interaction on the chat interface is enriched.

In some embodiments, the method further includes:
in a case that the current user answers the question correctly, switching to display next question information, or to display success prompt information, where the success prompt information is used for prompting that the current round of answering ends and the current user answers the questions successfully; and/or
in a case that the current user answers the question incorrectly, displaying failure prompt information, or switching a member attribute of the current user in a target answering team from a first member attribute to a second member attribute, where the failure prompt information is used for prompting that the current round of answering ends and the current user answers the questions unsuccessfully.

The next question information may be the next question information item after the current question information. The member attribute may be understood as an attribute of an answering member in the target answering team. For example, the first member attribute may be an attribute of being capable of participating in answering, and the second member attribute may be an attribute of being incapable of participating in answering and being capable of viewing answering of other users. The target answering team is a team in which the current user participates in answering. The target answering team may include the current user and other users. For example, the other users may be users other than the current user in the target chat. The number of the other users may be configured according to the actual situation, for example, the minimum number of people and/or the maximum number of people may be set. This is not limited in this embodiment.

In some implementations, in the case that the current user answers the question correctly, different information may be displayed based on whether there is next question information. Exemplarily, if there is next question information, the next question information may be displayed to allow the current user to continue to participate in subsequent answering; if there is no next question information, the success prompt information may be displayed to prompt the current user that the current round of answering ends and the current user answers the questions successfully.

In some implementations, in the case that the current user answers the question incorrectly, different information may be displayed based on different answering scenarios. Exemplarily, if the current user participates in team answering, the member attribute of the current user in the target answering team may be switched from the first member attribute to the second member attribute, that is, the current user may enter the spectator state and cannot answer questions, and a prompt "Currently spectating..." may also be displayed. If the current user participates in personal answering, the failure prompt information may be displayed in the case that the current user answers the question incorrectly to prompt the current user that the current round of answering ends and the current user answers the questions unsuccessfully.

In some embodiments, after switching the member attribute of the current user in the target answering team from the first member attribute to the second member attribute, the method further includes:
displaying success prompt information in response to a case that all team members in the target answering team finish answering questions and there is a team member who answers the questions successfully; and/or
displaying failure prompt information in response to a case that all the team members in the target answering team finish answering questions and there is no team member who answers the questions successfully.

In the above embodiment, for the scenario of team answering, after the current user enters the spectator state, whether the current round of team answering is successful may be determined based on the answering situations of the other team members in the target answering team, and different prompt information is displayed. For example, if all the team members in the target answering team finish answering questions and there is a team member who answers the questions successfully, that is, as long as at least one person in the target answering team answers the questions correctly at the end of the current round of answering, it may be determined that the current round of team answering is successful in response to this case, and the success prompt information is displayed. If all the team members in the target answering team finish answering questions and there is no team member who answers the questions successfully, that is, all the team members fail to answer the questions at the end of the current round of answering, it may be determined that the current round of team answering fails in response to this case, and the failure prompt information is displayed.

In some embodiments, after displaying the success prompt information, the method further includes:
switching the current interface from the answering interface to the chat interface, and displaying a first expression picture in the chat interface; and/or
after displaying the failure prompt information, the method further includes:
   switching the current interface from the answering interface to the chat interface, and displaying a second expression picture in the chat interface.

The first expression picture and the second expression picture are only used to distinguish different expression pictures, and are displayed differently in the chat interface. The specific content and display form of the first expression picture and the second expression picture are not limited, and may be configured in advance. For example, the first expression picture or the second expression picture may be displayed statically or dynamically in the chat interface.

In the above embodiment, different expression pictures may be displayed in the chat interface for the cases that the current user answers the questions successfully and unsuccessfully. For example, in the case that the current user answers the questions successfully, the first expression picture may be displayed in the chat interface, and/or, in the case that the current user answers the questions unsuccessfully, the second expression picture may be displayed in the chat interface. The current user is further prompted by the displayed expression picture whether the current user answers the questions successfully in this round, which enriches the prompting manners of whether the questions are answered successfully and the content displayed in the chat interface.

In some embodiments, the first expression picture is configured to move in the chat interface according to a first movement trajectory, and/or,
the second expression picture is configured to move in the chat interface according to a second movement trajectory.

The first movement trajectory may be the same as or different from the second movement trajectory, and the specific content may be configured by related personnel. In this embodiment, the first expression picture may be configured to move in the chat interface according to the first movement trajectory, and the second expression picture may be configured to move in the chat interface according to the second movement trajectory. For example, the first expression picture and/or the second expression picture may fall from the top of the chat interface to the bottom of the page and move out of the chat page from the bottom of the page.

Specifically, after the success prompt information is displayed, the current interface may be switched from the answering interface to the chat interface, the first expression picture is displayed in the chat interface, and the first expression picture is controlled to move in the chat interface according to the first movement trajectory. Alternatively, after the failure prompt information is displayed, the current interface may be switched from the answering interface to the chat interface, the second expression picture is displayed in the chat interface, and the second expression picture is controlled to move in the chat interface according to the second movement trajectory. On this basis, the display of the chat interface is enriched in combination with different answering situations.

In some embodiments, after displaying the success prompt information, the method further includes:
displaying obtaining prompt information in the chat interface, where the obtaining prompt information is configured to trigger obtaining of a corresponding virtual resource.

The obtaining prompt information may be configured to trigger the obtaining of the corresponding virtual resource. For example, the obtaining prompt information may be "Successfully cleared the level, click to receive a virtual resource". The user may obtain the corresponding virtual resource by triggering the obtaining prompt information, for example, may randomly obtain virtual resources such as red envelopes and pendants of different amounts. Further, the obtaining prompt information may be visible to all members of the target chat, or may be only visible to the users participating in question answering.

In some embodiments, after the success prompt information is displayed, a virtual resource pop-up window may also be directly popped up, so that the current user may obtain the corresponding virtual resource by clicking an obtaining control in the virtual resource pop-up window.

In some embodiments, an upper limit of virtual resources that a user may obtain in a single game may be set, and after the upper limit is exceeded, the user may continue to answer questions, but the user may be limited from obtaining virtual resources after clearing the level. Social rules may also be controlled. For example, in the same target chat and the same level, a user may only receive the virtual resources once, and a prompt "The reward has been received in this level" may be sent when the user passes the level for the second time. The rules may be flexibly set according to specific needs.

In some embodiments, exemplarily, after the failure prompt information is displayed, a pop-up window and/or next game preview information may also be displayed in the chat interface. For example, the copy of the pop-up window may be "Unfortunately, you failed to clear the level", and the next game preview may include a schedule display, and so on.

Fig. 1b is a schematic diagram of a chat interface according to an embodiment of the present disclosure. As shown in Fig. 1b, taking the team answering scenario as an example, after the success prompt information is displayed, the current interface may be switched from the answering interface to the chat interface, and the first expression picture 1 is displayed in the chat interface, and the obtaining prompt information 2 is displayed in the chat interface. The user may click the obtaining prompt information 2 to obtain the corresponding virtual resource.

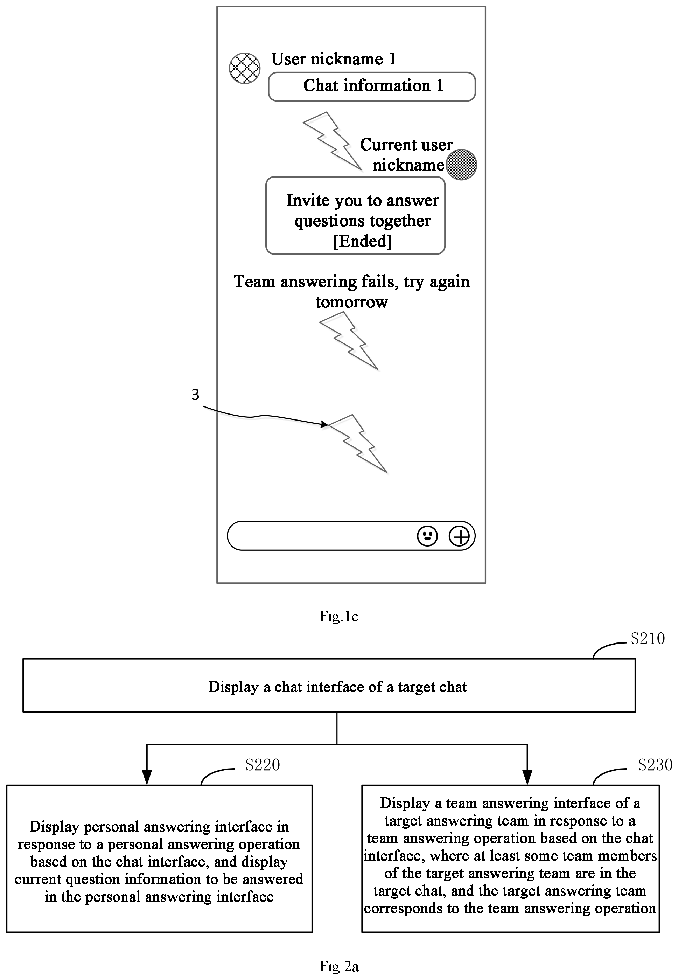

Fig. 1c is a schematic diagram of a chat interface according to an embodiment of the present disclosure. As shown in Fig. 1c, taking the team answering scenario as an example, after the failure prompt information is displayed, the current interface may be switched from the answering interface to the chat interface, the second expression picture 3 is displayed in the chat interface, and information such as "Team answering fails, try again tomorrow" may be displayed in the chat interface.

Fig. 2a is a schematic flowchart of another chat interface interaction method according to an embodiment of the present disclosure. The solution in this embodiment may be combined with one or more optional solutions in the above embodiment. Optionally, displaying the answering interface in response to the answering operation based on the chat interface includes: displaying a personal answering interface in response to a personal answering operation based on the chat interface, and displaying current question information to be answered in the personal answering interface; and/or displaying a team answering interface of a target answering team in response to a team answering operation based on the chat interface, where at least some team members of the target answering team are in the target chat, and the target answering team corresponds to the team answering operation.

For the content not detailed in this embodiment, reference may be made to the above embodiment.

As shown in Fig. 2a, the method includes the following steps.

S210: a chat interface of a target chat is displayed, and S220 and/or S230 are executed.

S220: a personal answering interface is displayed in response to a personal answering operation based on the chat interface, and current question information to be answered is displayed in the personal answering interface.

S230: a team answering interface of a target answering team is displayed in response to a team answering operation based on the chat interface, where at least some team members of the target answering team are in the target chat, and the target answering team corresponds to the team answering operation.

The personal answering operation may be an operation that triggers the display of the personal answering interface, and the team answering operation may be an operation that triggers the display of the team answering interface. For example, the personal answering operation and the team answering operation may be operations of clicking different answering controls. The answering controls may be located on the chat interface or on other interfaces or panels. The team members in the target answering team may be in the target chat or may come from outside the target chat. For example, other users may be invited to join the target answering team through an invitation operation. That is, at least some team members of the target answering team may be in the target chat, and the target answering team corresponds to the team answering operation.

In this embodiment, after the chat interface of the target chat is displayed, different answering interfaces may be displayed in response to different answering operations. For example, the personal answering interface may be displayed in response to the personal answering operation based on the chat interface, and the current question information to be answered is displayed in the personal answering interface. And/or, the team answering interface of the target answering team is displayed in response to the team answering operation based on the chat interface.

In some embodiments, after displaying the chat interface of the target chat, the method further includes:
displaying an answering initiating panel in the chat interface in response to a answering initiating operation applied on the chat interface, where a first answering control and/or a second answering control are displayed in the answering initiating panel, the first answering control is used for triggering display of a personal answering panel, the personal answering panel is used for executing the personal answering operation, the second answering control is configured to trigger the execution of the team answering operation, and the team answering operation includes a first team answering operation.

The question initiation operation may be an operation of displaying the answering initiating panel. For example, the answering initiating operation may apply on an answering initiating control displayed on the chat interface, or may directly apply on the chat interface. For example, the answering initiating operation may be an operation of executing a certain gesture on the chat interface. The answering initiating panel may be a panel used for initiating question answering. For example, the first answering control and/or the second answering control may be displayed on the answering initiating panel. The first answering control and the second answering control may be used to distinguish different answering controls.

Exemplarily, the first answering control may be used for triggering the display of the personal answering panel, and the personal answering panel may be used for executing the personal answering operation. The specific display content of the personal answering panel is not limited. For example, a control for the user to execute the personal answering operation may be displayed on the personal answering panel. The second answering control may be configured to trigger the execution of the team answering operation, that is, the current user may click the second answering control to execute the team answering operation. In addition, different triggers may correspond to different team answering operations. For example, the team answering operation may include the first team answering operation, and the first team answering operation may be considered as a team answering operation executed when the current user initiates team answering.

In some embodiments, a third answering control and/or answering information of at least some users in the target chat are displayed in the personal answering panel, the third answering control is configured to trigger the execution of the personal answering operation, and the answering information includes answering ranking information and/or answering score information.

The third answering control may be a control for the user to execute the personal answering operation, that is, the third answering control may be configured to trigger the execution of the personal answering operation. The question information of at least some users in the target chat may also be displayed on the personal answering panel. The answering information may be information related to question answering. For example, the answering information may include the answering ranking information and/or the answering score information. The answering ranking information is used for representing the ranking of the users in question answering, and the answering score information is used for representing the scores of the users in question answering, for example, the number of questions that have been answered correctly.

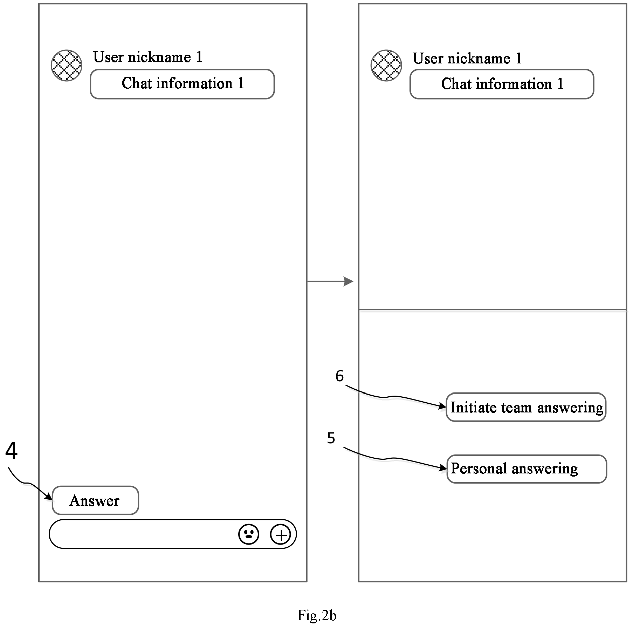

Fig. 2b is a schematic diagram of an answering initiating panel according to an embodiment of the present disclosure. As shown in Fig. 2b, after the chat interface of the target chat is displayed, the answering initiating operation may be executed by clicking the control 4, so that the current application may display the answering initiating panel in the chat interface. The first answering control 5 and the second answering control 6 are displayed on the answering initiating panel. The first answering control 5 may be used for triggering the display of the personal answering panel, and the second answering control 6 may be configured to trigger the execution of the team answering operation.

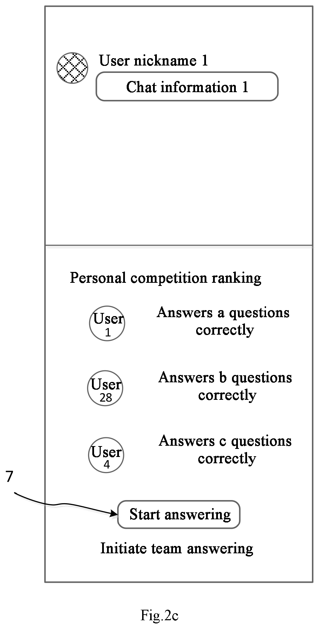

Fig. 2c is a schematic diagram of a personal answering panel according to an embodiment of the present disclosure. As shown in Fig. 2c, the third answering control 7, and the answering ranking information and the answering score information of at least some users in the target chat may be displayed on the personal answering panel, that is, user 1 answers a questions correctly, user 28 answers b questions correctly, and user 4 answers c questions correctly, where a, b, and c are positive integers and satisfy a>b>c.

According to the chat interface interaction method provided by the embodiment of the present disclosure, the chat interface of the target chat is displayed, the personal answering interface is displayed in response to the personal answering operation based on the chat interface, and the current question information to be answered is displayed in the personal answering interface; and/or the team answering interface of the target answering team is displayed in response to the team answering operation based on the chat interface, where at least some team members of the target answering team are in the target chat, and the target answering team corresponds to the team answering operation. By using the method, different answering interfaces are displayed in response to the personal answering operation or the team answering operation based on the chat interface, so that different interaction operations on the chat interface may be implemented, and the interaction on the chat interface is further enriched.

In some embodiments, displaying the team answering interface of the target answering team in response to the team answering operation based on the chat interface includes:
in response to a first team answering operation based on the chat interface, sending a team building card of the target answering team in the chat interface in a form of chat information, and displaying the team answering interface of the target answering team; or
in response to a second team answering operation based on the chat interface, joining the target answering team corresponding to the second team answering operation, and displaying the team answering interface of the target answering team.

In this embodiment, the team building card may be used for inviting team members to participate in question answering. For example, other users in the target chat may click the team building card to join the target answering team and participate in question answering together. The second team answering operation may be considered as a team answering operation executed by a user who accepts the invitation to answer questions. The second team answering operation may apply on the team building card or team building prompt information corresponding to the target answering team. For example, the second team answering operation may be considered as an operation of clicking the team building card or the team building prompt information. The team building prompt information may be used for prompting joining the target answering team, and the location of the team building prompt information is not limited. For example, the team building prompt information may be located in a station banner of the chat interface, or may be included in the notification information sent outside the current application.

Therefore, in this embodiment, the team answering interface of the target answering team may be displayed differently based on different team answering operations. For example, if the current user wants to initiate team answering, the current user may execute the first team answering operation based on the chat interface, so that the current application may send the team building card for inviting to answer questions in the target chat and display the team answering interface of the target answering team in response to the first team answering operation.

Alternatively, if there is team answering initiated by other users in the target chat, the current user may execute the second team answering operation to join the target answering team corresponding to the second team answering operation, so that the current application may display the team answering interface of the target answering team in response to the second team answering operation.

In some embodiments, a team building panel of the target answering team and/or current question information to be answered are displayed in the team answering interface, where the team building panel is used for displaying member information of the target answering team.

The team building panel may be used for displaying the member information of the target answering team, such as the number of team members or avatars.

In this embodiment, the team building panel of the target answering team may be displayed in the team answering interface, the current question information to be answered may be displayed in the team answering interface, or the team building panel of the target answering team and the current question information to be answered may be simultaneously displayed in the team answering interface. Exemplarily, when the target answering team has not started to answer questions, for example, when the target answering team is in the team building stage, the team building panel of the target answering team may be displayed in the team answering interface. When the target answering team has started to answer questions, for example, when the target answering team is in the answering stage, the current question information to be answered may be displayed in the team answering interface.

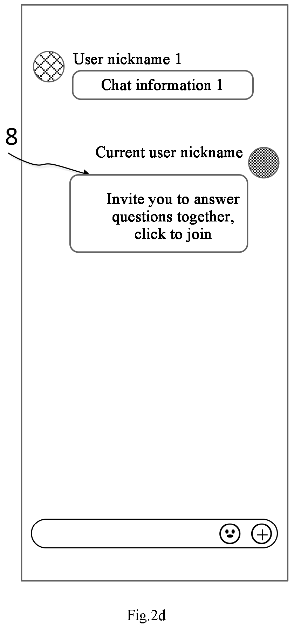

Fig. 2d is a schematic diagram of a team building card according to an embodiment of the present disclosure. As shown in Fig. 2d, the second answering control 6 is clicked in the answering initiating panel in Fig. 2b, it may be determined that the current user executes the first team answering operation, and in response to the first team answering operation, the team building card 8 of the target answering team may be sent in the chat interface in the form of the chat information.

In some embodiments, joining the target answering team corresponding to the second team answering operation includes:
joining, in a form of a first member attribute, the target answering team corresponding to the second team answering operation, where the target answering team supports a team member having the first member attribute to answer questions; or
joining, in a form of a second member attribute, the target answering team corresponding to the second team answering operation, where the target answering team supports a team member having the second member attribute to view a team member having the first member attribute in the target answering team answering questions.

In an implementation, the user may select the form of joining the target answering team, or the form of the user joining the target answering team may be determined based on the execution timing of the second team answering operation. For example, the current user may freely choose to join the target answering team corresponding to the second team answering operation in the form of the first member attribute or the second member attribute.

Alternatively, if the target answering team has not started to answer questions when the current user executes the second team answering operation, the current user may join the target answering team corresponding to the second team answering operation in the form of the first member attribute. If the target answering team has already started to answer questions when the current user performs the second team answering operation, the current user may join the target answering team corresponding to the second team answering operation in the form of the second member attribute.

The target answering team may support the team member having the first member attribute to answer questions, and/or support the team member having the second member attribute to view the team member having the first member attribute in the target answering team answering questions.

In some embodiments, the team building panel of the target answering team is displayed in the team answering interface, and after displaying the team answering interface of the target answering team, the method further includes at least one of the following:
in response to an answering start instruction, canceling displaying the team building panel, and displaying current question information to be answered in the team answering interface;
in response to a team disbanding instruction, disbanding the target answering team, and canceling displaying the team building panel;
in response to a team exit instruction, exiting the target answering team, and canceling displaying the team building panel; or
in response to an invitation panel display instruction, displaying an invitation panel, where the invitation panel is configured to trigger an invitation for a user to be invited to join the target chat to view the team building card, and the user to be invited is a user selected by the current user in the invitation panel.

The answering start instruction may be used for triggering the start of team answering. The answering start instruction, the invitation panel display instruction, the team exit instruction, and the team disbanding instruction may be triggered by clicking on respective controls in the team answering interface, or may be triggered in other manners, for example, sent by other devices. The invitation panel may be used for inviting users to join the target chat. The current user may select the user to be invited in the invitation panel. For example, the invitation panel may be configured to trigger the invitation for the user to be invited to join the target chat to view the team building card.

In specific implementations, when the team building panel of the target answering team is displayed in the team answering interface, the current user may click an answering start control to trigger the generation of the answering start instruction when the preset condition is satisfied, for example, when the number of team members is greater than or equal to the preset number. Alternatively, the current application may receive the answering start instruction sent by other devices, and the answering start instruction may be generated in response to the trigger operation of the user who initiates the target answering team on the answering start control. At this time, the current application may cancel the display of the team building panel in response to the answering start instruction, and display the current question information to be answered in the team answering interface. Exemplarily, when the number of team members is less than the preset number, the answering start control may be grayed out. When the number of team members is greater than or equal to the preset number, the answering start control may support clicking, and question answering may be started after the click.

When the team building panel of the target answering team is displayed in the team answering interface, if the current user is the user who initiates team answering, the current user may also disband the target answering team by clicking a disbanding control. At this time, the current application may generate the team disbanding instruction, and in response to the team disbanding instruction, the current application disbands the target answering team and cancels the display of the team building panel.

When the team building panel of the target answering team is displayed in the team answering interface, the current user may exit the target answering team by clicking the team exit control according to own will. At this time, the current application may generate the team exit instruction, and in response to the team exit instruction, the current user exits the target answering team, and the display of the team building panel is cancelled.

When the team building panel of the target answering team is displayed in the team answering interface, the current user may click the invitation control to trigger the generation of the invitation panel display instruction. At this time, the current application may generate the invitation panel display instruction, and display the invitation panel in response to the invitation panel display instruction, so that the current user may select the user to be invited and invite the user to be invited to join the target chat to view the team building card.

In some embodiments, a countdown may also be added. At the end of the countdown, if no one joins or the number of joined people is less than the preset number, the target answering team may be disbanded. Alternatively, at the end of the countdown, if the answering start instruction is not triggered, the target answering team may also be disbanded.

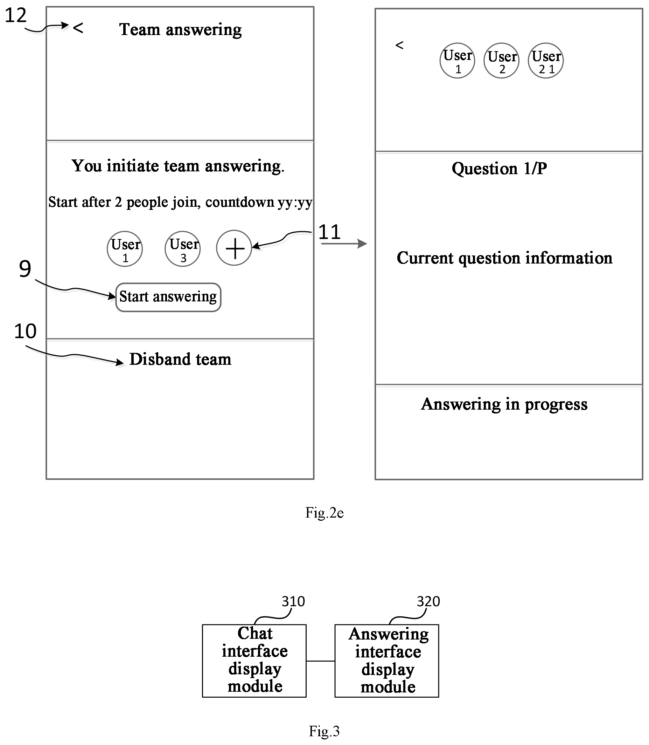

Fig. 2e is a schematic diagram of a team answering interface according to an embodiment of the present disclosure. As shown in Fig. 2e, the team building panel of the target answering team is displayed in the team answering interface, and the current user may click the control 9 to trigger the generation of the answering start instruction, so that the current application may cancel the display of the team building panel in response to the answering start instruction, and display the current question information to be answered in the team answering interface. The current user may also click the control 10 to trigger the generation of the team disbanding instruction, so that the current application may disband the target answering team and cancel the display of the team building panel in response to the team disbanding instruction. The current user may click the team exit control (not shown in Fig. 2e) to trigger the generation of the team exit instruction, so that the current application may exit the target answering team and cancel the display of the team building panel in response to the team exit instruction. The current user may click the control 11 to trigger the generation of the invitation panel display instruction, so that the current application may display the invitation panel in response to the invitation panel display instruction.

In addition, the current user may also click the control 12 to return to the chat interface. In the case of returning to the chat interface, the current user may stay in the target answering team or exit the target answering team, which may be flexibly set according to the actual situation.

In some embodiments, exemplarily, after any user in the target chat clicks to initiate team answering, all group members may see the team building prompt information in the chat interface, and the team building prompt information may support clicking to collapse.

Before the recipient user (for example, a user other than the user who initiates team answering in the target chat) joins the target answering team, the joined people may be displayed in real time. After the recipient user clicks to join the target answering team, the team building panel is displayed in the answering interface, and the recipient user waits for the start of question answering. Meanwhile, after the recipient user joins the target answering team, the joined people may be displayed in real time in the team building panel, and others may be invited to join the target answering team. The answering start control may be configured not to support clicking by the recipient user.

In some embodiments, exemplarily, if the initiator (that is, the user who initiates team answering) executes the first team answering operation, other members in the target chat may be notified to start team building, for example, a banner may be displayed saying "xx initiates answering team building, join". Notification information may also be sent outside the current application, such as "xx initiates answering team building", or a prompt "xx initiates answering team building" may be displayed on the message page, or a red dot may appear on the number on the message page for prompting.

In some embodiments, exemplarily, after the initiator clicks to disband the team, the other members in the target chat may receive a notification, for example, "xx disbands the team" may be displayed on the message page, and a red dot appears on the number on the message page.

In some embodiments, exemplarily, after the initiator clicks to start answering questions, the other members in the target chat may receive notification copy, for example, a banner in the chat interface may display "xx initiates answering team building, join". Notification information "xx initiates answering team building" may also be sent outside the current application, or a prompt "xx initiates answering team building" may be displayed on the message page, or a red dot may appear on the number on the message page for prompting.

In some embodiments, after displaying the current question information to be answered in the team answering interface, the method further includes:
displaying an answer input by a team member in the target answering team for the current question information in the team answering interface.

For example, the answer input by the team member for the current question information may be displayed in real time in the team answering interface. For example, when a user clicks to select a candidate option, the team answering interface may be updated in real time in the applications of the other team members.

In some embodiments, exemplarily, the target chat may support at most one answering team existing at the same time. For the case that at most one answering team is supported to exist at the same time, when there is an initiated team building or ongoing answering in the target chat, the answering entry (such as the control 4) may disappear. Alternatively, the answering entry may not disappear, but when the answering entry is clicked, a prompt "There is ongoing answering in the group" may be displayed.

The frequency control for participating in question answering may be prompted with a pop-up notification box, and the copy is not limited. Exemplarily, at the same time, there may only be one target answering team in the same target chat. At this time, when a user clicks to join or initiate a team, a prompt "There is already a team in this group" is displayed. At the same time, a user may only join one target answering team. At this time, when the user clicks to join or initiate a team, a prompt "Currently already in a team" is displayed.

Fig. 3 is a schematic diagram of a structure of a chat interface interaction apparatus according to an embodiment of the present disclosure. The apparatus may be applied to the case of interacting on the chat interface, and the apparatus may be implemented by software and/or hardware and is generally integrated on an electronic device.

As shown in Fig. 3, the apparatus includes:
a chat interface display module 310, configured to display a chat interface of a target chat; and
an answering interface display module 320, configured to display an answering interface in response to an answering operation based on the chat interface, where the answering interface is used for answering questions.

According to the chat interface interaction apparatus provided by the embodiment of the present disclosure, the chat interface of the target chat is displayed by the chat interface display module, and the answering interface is displayed by the answering interface display module in response to the answering operation based on the chat interface, where the answering interface is used for answering questions. By using the apparatus, the answering interface is displayed in response to the answering operation based on the chat interface, so that the answering interaction on the chat interface may be implemented, and the interaction on the chat interface is enriched.

Optionally, the answering interface display module is further configured to:
display preset question information, where the preset question information is determined based on a preset question database or a preset theme.

Optionally, the answering interface display module includes:
a first interface display unit, configured to display a personal answering interface in response to a personal answering operation based on the chat interface, and display current question information to be answered in the personal answering interface; and/or
a second interface display unit, configured to display a team answering interface of a target answering team in response to a team answering operation based on the chat interface, where at least some team members of the target answering team are in the target chat, and the target answering team corresponds to the team answering operation.

Optionally, the chat interface interaction apparatus provided by the embodiment of the present disclosure further includes:
a panel display module, configured to, after displaying the chat interface of the target chat, display an answering initiating panel in the chat interface in response to an answering initiating operation applied on the chat interface, where a first answering control and/or a second answering control are displayed in the answering initiating panel, the first answering control is used for triggering display of a personal answering panel, the personal answering panel is used for executing the personal answering operation, the second answering control is configured to trigger the execution of the team answering operation, and the team answering operation includes a first team answering operation.

Optionally, a third answering control and/or answering information of at least some users in the target chat are displayed in the personal answering panel, the third answering control is configured to trigger the execution of the personal answering operation, and the answering information includes answering ranking information and/or answering score information.

Optionally, the answering initiating operation applies on an answering initiating control displayed on the chat interface.

Optionally, the second interface display unit includes:
a sending subunit, configured to send, in response to the first team answering operation based on the chat interface, a team building card of the target answering team in the chat interface in a form of chat information, and display the team answering interface of the target answering team; or
a joining subunit, configured to join, in response to a second team answering operation based on the chat interface, the target answering team corresponding to the second team answering operation, and display the team answering interface of the target answering team.

Optionally, the joining subunit is further configured to:
join, in a form of a first member attribute, the target answering team corresponding to the second team answering operation, where the target answering team supports a team member having the first member attribute to answer questions; or
join, in a form of a second member attribute, the target answering team corresponding to the second team answering operation, where the target answering team supports a team member having the second member attribute to view a team member having the first member attribute in the target answering team answering questions.

Optionally, a team building panel of the target answering team and/or current question information to be answered are displayed in the team answering interface, where the team building panel is used for displaying member information of the target answering team.

Optionally, the team building panel of the target answering team is displayed in the team answering interface, and the second interface display unit further includes at least one of the following:
a display canceling subunit, configured to cancel, after the displaying the team answering interface of the target answering team, displaying the team building panel in response to an answering start instruction, and display current question information to be answered in the team answering interface;
a disbanding subunit, configured to disband the target answering team and cancel displaying the team building panel in response to a team disbanding instruction;
an exit subunit, configured to exit the target answering team and cancel displaying the team building panel in response to a team exit instruction; or
an invitation subunit, configured to display an invitation panel in response to an invitation panel display instruction, where the invitation panel is configured to trigger an invitation for a user to be invited to join the target chat to view the team building card, and the user to be invited is a user selected by the current user in the invitation panel.

Optionally, the second interface display unit further includes:
an answer display subunit, configured to display, after displaying the current question information to be answered in the team answering interface, an answer input by a team member in the target answering team for the current question information in the team answering interface.

Optionally, the second team answering operation applies on a team building card or team building prompt information corresponding to the target answering team, and the team building prompt information is used for prompting joining the target answering team.

Optionally, the chat interface interaction apparatus provided by the embodiment of the present disclosure further includes:
a first information display module, configured to display, after displaying the answering interface, first result prompt information in response to an answering operation for the current question information displayed in the answering interface, where the first result prompt information is used for prompting whether the current user answers the question correctly; and/or
a second information display module, configured to display, after displaying the answering interface, second result prompt information in response to a case that the current user does not execute the answering operation for the current question information within a preset duration, where the second result prompt information is used for prompting that the current user answers the question incorrectly.

Optionally, the chat interface interaction apparatus provided by the embodiment of the present disclosure further includes:
a third information display module, configured to switch, in a case that the current user answers the question correctly, to display next question information, or display success prompt information, where the success prompt information is used for prompting that the current round of answering ends and the current user answers the questions successfully; and/or
a fourth information display module, configured to display, in a case that the current user answers the question incorrectly, failure prompt information, or switch a member attribute of the current user in the target answering team from a first member attribute to a second member attribute, where the failure prompt information is used for prompting that the current round of answering ends and the current user answers the questions unsuccessfully.

Optionally, the chat interface interaction apparatus provided by the embodiment of the present disclosure further includes:
a fifth information display module, configured to display, after switching the member attribute of the current user in the target answering team from the first member attribute to the second member attribute, success prompt information in response to a case that all team members in the target answering team finish answering questions and there is a team member who answers the questions successfully; and/or
a sixth information display module, configured to display, after switching the member attribute of the current user in the target answering team from the first member attribute to the second member attribute, failure prompt information in response to a case that all the team members in the target answering team finish answering questions and there is no team member who answers the questions successfully.

Optionally, the chat interface interaction apparatus provided by the embodiment of the present disclosure further includes:
a first picture display module, configured to switch, after displaying the success prompt information, the current interface from the answering interface to the chat interface, and display a first expression picture in the chat interface; and/or
a second picture display module, configured to switch, after displaying the failure prompt information, the current interface from the answering interface to the chat interface, and display a second expression picture in the chat interface.

Optionally, the first expression picture is configured to move within the chat interface according to a first movement trajectory, and/or,
the second expression picture is configured to move within the chat interface according to a second movement trajectory.

Optionally, the chat interface interaction apparatus provided by the embodiment of the present disclosure further includes:
a seventh information display module, configured to display, after displaying the success prompt information, obtaining prompt information in the chat interface, where the obtaining prompt information is configured to trigger obtaining of a corresponding virtual resource.

The above chat interface interaction apparatus may perform the chat interface interaction method provided by any embodiment of the present disclosure, and has corresponding functional modules and beneficial effects for performing the method.

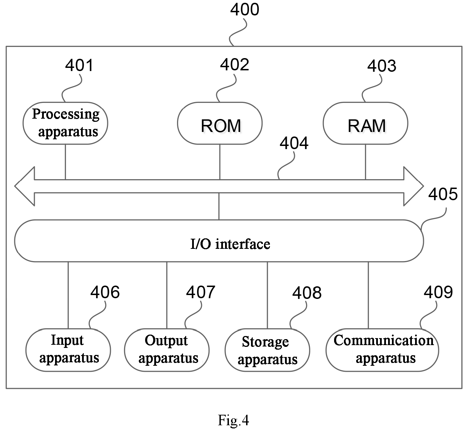

Reference is made to Fig. 4 below, which illustrates a schematic diagram of a structure of an electronic device 400 suitable for implementing an embodiment of the present disclosure. The terminal device in the embodiment of the present disclosure may include, but is not limited to, mobile terminals such as a mobile phone, a notebook computer, a digital broadcast receiver, a personal digital assistant (PDA), a tablet computer, a portable media player (PMP), and a vehicle-mounted terminal (e.g., a vehicle-mounted navigation terminal), and fixed terminals such as a digital TV and a desktop computer. The electronic device shown in Fig. 4 is only an example and should not impose any limitation on the function and scope of use of the embodiments of the present disclosure.

As shown in Fig. 4, the electronic device 400 may include a processing apparatus 401 (e.g., a central processing unit and a graphics processing unit), which may perform various appropriate actions and processing according to a program stored in a read-only memory (ROM) 402 or a program loaded from a storage apparatus 408 into a random access memory (RAM) 403. The RAM 403 further stores various programs and data required for the operation of the electronic device 400. The processing apparatus 401, the ROM 402, and the RAM 403 are interconnected by means of a bus 404. An input/output (I/O) interface 405 is also connected to the bus 404.

Usually, the following apparatuses may be connected to the I/O interface 405: an input apparatus 406 including, for example, a touch screen, a touchpad, a keyboard, a mouse, a camera, a microphone, an accelerometer, and a gyroscope; an output apparatus 407 including, for example, a liquid crystal display (LCD), a speaker, and a vibrator; the storage apparatus 408 including, for example, a magnetic tape and a hard disk; and a communication apparatus 409. The communication apparatus 409 may allow the electronic device 400 to perform wireless or wired communication with other devices to exchange data. Although Fig. 4 shows the electronic device 400 having various apparatuses, it should be understood that it is not required to implement or provide all of the shown apparatuses. Alternatively, more or fewer apparatuses may be implemented or provided.

In particular, according to the embodiments of the present disclosure, the process described above with reference to the flowchart may be implemented as a computer software program. For example, the embodiments of the present disclosure include a computer program product, which includes a computer program carried on a non-transitory computer-readable medium, where the computer program contains program code for performing the method shown in the flowchart. In such an embodiment, the computer program may be downloaded and installed from a network via the communication apparatus 409, or installed from the storage apparatus 408, or installed from the ROM 402. When the computer program is executed by the processing apparatus 401, the above-mentioned functions defined in the method of the embodiment of the present disclosure are executed.

It should be noted that the above computer-readable medium in the present disclosure may be a computer-readable signal medium, a computer-readable storage medium, or any combination thereof. The computer-readable storage medium may be, for example, but is not limited to, an electronic, magnetic, optical, electromagnetic, infrared, or semiconductor system, apparatus, device, or any combination thereof. More specific examples of the computer-readable storage medium may include, but are not limited to, an electrical connection having one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program, and the program may be used by or in combination with an instruction execution system, apparatus, or device. In the present disclosure, the computer-readable signal medium may include a data signal propagated on a baseband or as a part of a carrier, and computer-readable program code is carried in the data signal. The data signal propagated in this manner may be in various forms, and includes, but is not limited to, an electromagnetic signal, an optical signal, or any suitable combination thereof. The computer-readable signal medium may also be any computer-readable medium other than the computer-readable storage medium, and the computer-readable signal medium may send, propagate, or transmit the program used by or in combination with the instruction execution system, apparatus, or device. The program code contained on the computer-readable medium may be transmitted in any suitable medium, including but not limited to a wire, an optical cable, a radio frequency (RF), or any suitable combination thereof.

In some implementations, the client and the server may communicate using any currently known or future developed network protocol, such as the hypertext transfer protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The above computer-readable medium may be contained in the above electronic device, or may exist alone without being assembled into the electronic device.

The above computer-readable medium carries one or more programs, and the one or more programs, when executed by the electronic device, cause the electronic device to display a chat interface of a target chat and display an answering interface in response to an answering operation based on the chat interface, where the answering interface is used for answering questions.

The computer program code for performing the operations of the present disclosure may be written in one or more programming languages or a combination thereof, where the programming languages include, but are not limited to, an object-oriented programming language, such as Java, Smalltalk, and C++, and further include conventional procedural programming languages, such as "C" language or similar programming languages. The program code may be completely executed on a user computer, partially executed on a user computer, executed as an independent software package, partially executed on a user computer and partially executed on a remote computer, or completely executed on a remote computer or server. In the case involving a remote computer, the remote computer may be connected to the user computer through any kind of network, including a local area network (LAN) or a wide area network (WAN), or may be connected to an external computer (for example, connected through the Internet using an Internet service provider).

The flowchart and block diagrams in the drawings illustrate the architecture, functionality, and operation of possible implementations of systems, methods and computer program products according to various embodiments of the present disclosure. In this regard, each block in the flowchart or block diagrams may represent a module, a program segment, or a portion of code that includes one or more executable instructions for implementing a specified logical function. Furthermore, it should be noted that, in some alternative implementations, functions indicated in the blocks may occur in an order different from that indicated in the drawings. For example, two blocks shown in succession may, in fact, be executed substantially concurrently, or the blocks may sometimes be executed in a reverse order, depending upon the functionality involved. It also should be noted that each block of the block diagrams and/or flowchart, or a combination of blocks in the block diagrams and/or flowchart may be implemented in a dedicated hardware-based system that perform a specified function or operation, or may be implemented in a combination of dedicated hardware and a computer instruction.

The involved units described in the embodiments of the present disclosure may be implemented by means of software, and may also be implemented by means of hardware. The name of a module does not constitute a limitation on the module itself under certain circumstances.

The foregoing functions described herein may be performed, at least in part, by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semi-conductive system, apparatus or device, or any suitable combination of the foregoing. More specific examples of the machine-readable storage medium would include an electrical connection on the basis of one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to one or more embodiments of the present disclosure, Example 1 provides a chat interface interaction method, including:
displaying a chat interface of a target chat; and
displaying an answering interface in response to an answering operation based on the chat interface, where the answering interface is used for answering questions.

According to one or more embodiments of the present disclosure, Example 2 is the method according to Example 1, displaying the answering interface includes:
displaying preset question information, where the preset question information is determined based on a preset question database or a preset theme.

According to one or more embodiments of the present disclosure, Example 3 is the method according to Example 1, displaying the answering interface in response to the answering operation based on the chat interface includes:
displaying a personal answering interface in response to a personal answering operation based on the chat interface, and displaying current question information to be answered in the personal answering interface; and/or
displaying a team answering interface of a target answering team in response to a team answering operation based on the chat interface, where at least some team members of the target answering team are in the target chat, and the target answering team corresponds to the team answering operation.

According to one or more embodiments of the present disclosure, Example 4 is the method according to Example 3, after displaying the chat interface of the target chat, the method further includes:
displaying an answering initiating panel in the chat interface in response to an answering initiating operation applied on the chat interface, where a first answering control and/or a second answering control are displayed in the answering initiating panel, the first answering control is used for triggering display of a personal answering panel, the personal answering panel is used for executing the personal answering operation, the second answering control is configured to trigger the execution of the team answering operation, and the team answering operation includes a first team answering operation.

According to one or more embodiments of the present disclosure, Example 5 is the method according to Example 4, a third answering control and/or answering information of at least some users in the target chat are displayed in the personal answering panel, the third answering control is configured to trigger the execution of the personal answering operation, and the answering information includes answering ranking information and/or answering score information.

According to one or more embodiments of the present disclosure, Example 6 is the method according to Example 4, the answering initiating operation applies on an answering initiating control displayed on the chat interface.

According to one or more embodiments of the present disclosure, Example 7 is the method according to Example 3, displaying the team answering interface of the target answering team in response to the team answering operation based on the chat interface includes:
in response to a first team answering operation based on the chat interface, sending a team building card of the target answering team in the chat interface in a form of chat information, and displaying the team answering interface of the target answering team; or
in response to a second team answering operation based on the chat interface, joining the target answering team corresponding to the second team answering operation, and displaying the team answering interface of the target answering team.

According to one or more embodiments of the present disclosure, Example 8 is the method according to Example 7, joining the target answering team corresponding to the second team answering operation includes:
joining, in a form of a first member attribute, the target answering team corresponding to the second team answering operation, where the target answering team supports a team member having the first member attribute to answer questions; or
joining, in a form of a second member attribute, the target answering team corresponding to the second team answering operation, where the target answering team supports a team member having the second member attribute to view a team member having the first member attribute in the target answering team answering questions.

According to one or more embodiments of the present disclosure, Example 9 is the method according to Example 7, a team building panel of the target answering team and/or current question information to be answered are displayed in the team answering interface, where the team building panel is used for displaying member information of the target answering team.

According to one or more embodiments of the present disclosure, Example 10 is the method according to Example 7, the team building panel of the target answering team is displayed in the team answering interface, and after displaying the team answering interface of the target answering team, the method further includes at least one of the following:
in response to an answering start instruction, canceling displaying the team building panel, and displaying current question information to be answered in the team answering interface;
in response to a team disbanding instruction, disbanding the target answering team, and canceling displaying the team building panel;
in response to a team exit instruction, exiting the target answering team, and canceling displaying the team building panel; or
in response to an invitation panel display instruction, displaying an invitation panel, where the invitation panel is configured to trigger an invitation for a user to be invited to join the target chat to view the team building card, and the user to be invited is a user selected by the current user in the invitation panel.

According to one or more embodiments of the present disclosure, Example 11 is the method according to Example 10, after displaying the current question information to be answered in the team answering interface, the method further includes:
displaying an answer input by a team member in the target answering team for the current question information in the team answering interface.

According to one or more embodiments of the present disclosure, Example 12 is the method according to Example 7, the second team answering operation applies on a team building card or team building prompt information corresponding to the target answering team, and the team building prompt information is used for prompting joining the target answering team.

According to one or more embodiments of the present disclosure, Example 13 is the method according to any one of Examples 1 to 12, after displaying the answering interface, the method further includes:
displaying first result prompt information in response to an answer operation for the current question information displayed in the answering interface, where the first result prompt information is used for prompting whether the current user answers the question correctly; and/or
displaying second result prompt information in response to a case that the current user does not execute the answer operation for the current question information within a preset duration, where the second result prompt information is used for prompting that the current user answers the question incorrectly.

According to one or more embodiments of the present disclosure, Example 14 is the method according to Example 13, the method further includes:
in a case that the current user answers the question correctly, switching to display next question information, or displaying success prompt information, where the success prompt information is used for prompting that the current round of answering ends and the current user answers the questions successfully; and/or
in a case that the current user answers the question incorrectly, displaying failure prompt information, or switching a member attribute of the current user in the target answering team from a first member attribute to a second member attribute, where the failure prompt information is used for prompting that the current round of answering ends and the current user answers the questions unsuccessfully.

According to one or more embodiments of the present disclosure, Example 15 is the method according to Example 14, after switching the member attribute of the current user in the target answering team from the first member attribute to the second member attribute, the method further includes:
displaying success prompt information in response to a case that all team members in the target answering team finish answering questions and there is a team member who answers the questions successfully; and/or
displaying failure prompt information in response to a case that all the team members in the target answering team finish answering questions and there is no team member who answers the questions successfully.

According to one or more embodiments of the present disclosure, Example 16 is the method according to Example 14, after displaying the success prompt information, the method further includes:
switching the current interface from the answering interface to the chat interface, and displaying a first expression picture in the chat interface; and/or
after displaying the failure prompt information, the method further includes:
   switching the current interface from the answering interface to the chat interface, and displaying a second expression picture in the chat interface.

According to one or more embodiments of the present disclosure, Example 17 is the method according to Example 16, the first expression picture is configured to move within the chat interface according to a first movement trajectory, and/or,
the second expression picture is configured to move within the chat interface according to a second movement trajectory.

According to one or more embodiments of the present disclosure, Example 18 is the method according to Example 14, after displaying the success prompt information, the method further includes:
displaying obtaining prompt information in the chat interface, where the obtaining prompt information is configured to trigger obtaining of a corresponding virtual resource.

According to one or more embodiments of the present disclosure, Example 19 provides a chat interface interaction apparatus, including:
a chat interface display module, configured to display a chat interface of a target chat; and
an answering interface display module, configured to display an answering interface in response to an answering operation based on the chat interface, where the answering interface is used for answering questions.

According to one or more embodiments of the present disclosure, Example 20 provides an electronic device, including:
one or more processors; and
a memory, configured to store one or more programs,
when the one or more programs are executed by the one or more processors, the one or more processors are caused to implement the chat interface interaction method according to any one of Examples 1 to 18.

According to one or more embodiments of the present disclosure, Example 21 provides a computer-readable storage medium having a computer program stored thereon, where the chat interface interaction method according to any one of Examples 1 to 18 is implemented when the program is executed by a processor.

The above description is only a preferred embodiment of the present disclosure and an explanation of the applied technical principles. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the above disclosed concept. For example, a technical solution formed by replacing the above features with technical features with similar functions disclosed in the present disclosure (but not limited thereto).

Furthermore, although the operations are depicted in a particular order, this should not be understood as requiring the operations to be performed in the particular order shown or in a sequential order. Under certain circumstances, multitasking and parallel processing may be beneficial. Likewise, although the above discussion contains several specific implementation details, these should not be construed as limitations on the scope of the present disclosure. Certain features described in the context of separate embodiments may also be implemented in combination in a single embodiment. Conversely, various features described in the context of a single embodiment may also be implemented in a plurality of embodiments individually or in any suitable subcombination.

Although the subject matter has been described in a language specific to structural features and/or logical actions of the method, it should be understood that the subject matter defined in the appended claims is not necessarily limited to the specific features or actions described above. Conversely, the specific features and actions described above are merely exemplary forms of implementing the claims.

## Claims

1. A chat interface interaction method, comprising:
displaying a chat interface of a target chat; and
displaying an answering interface in response to an answering operation based on the chat interface, wherein the answering interface is configured to answer a question.

2. The method of claim 1, wherein displaying the answering interface comprises:
displaying preset question information, wherein the preset question information is determined based on a preset question database or a preset theme.

3. The method of claim 1, wherein displaying the answering interface in response to the answering operation based on the chat interface comprises at least one of:
displaying a personal answering interface in response to a personal answering operation based on the chat interface, and displaying current question information to be answered in the personal answering interface; or
displaying a team answering interface of a target answering team in response to a team answering operation based on the chat interface, wherein at least some team members of the target answering team are in the target chat, and the target answering team corresponds to the team answering operation.

4. The method of claim 3, wherein after displaying the chat interface of the target chat, the method further comprises:
displaying an answering initiating panel in the chat interface in response to an answering initiating operation on the chat interface, wherein at least one of a first answering control or a second answering control are displayed in the answering initiating panel, the first answering control is configured to trigger a display of a personal answering panel, the personal answering panel is configured to execute the personal answering operation, the second answering control is configured to trigger an execution of the team answering operation, and the team answering operation comprises a first team answering operation.

5. The method of claim 4, wherein at least one of a third answering control or answering information of at least some users in the target chat are displayed in the personal answering panel, the third answering control is configured to trigger the execution of the personal answering operation, and the answering information comprises at least one of answering ranking information or answering score information.

6. The method of claim 4, wherein the answering initiating operation applies on an answering initiating control displayed on the chat interface.

7. The method of claim 3, wherein displaying the team answering interface of the target answering team in response to the team answering operation based on the chat interface comprises:
sending, in response to a first team answering operation based on the chat interface, a team building card of the target answering team in the chat interface in a form of chat information, and displaying the team answering interface of the target answering team; or
joining, in response to a second team answering operation based on the chat interface, a target answering team corresponding to the second team answering operation, and displaying the team answering interface of the target answering team.

8. The method of claim 7, wherein joining the target answering team corresponding to the second team answering operation comprises:
joining, in a form of a first member attribute, the target answering team corresponding to the second team answering operation, wherein the target answering team supports a team member having the first member attribute to answer questions; or
joining, in a form of a second member attribute, the target answering team corresponding to the second team answering operation, wherein the target answering team supports a team member having the second member attribute to view a team member having the first member attribute in the target answering team answering questions.

9. The method of claim 7, wherein at least one of a team building panel of the target answering team or the current question information to be answered are displayed in the team answering interface, wherein the team building panel is configured to display member information of the target answering team.

10. The method of claim 7, wherein a team building panel of the target answering team is displayed in the team answering interface, and after displaying the team answering interface of the target answering team, the method further comprises at least one of the following:
canceling, in response to an answering start instruction, displaying the team building panel, and displaying the current question information to be answered in the team answering interface;
disbanding, in response to a team disbanding instruction, the target answering team, and canceling displaying a team building panel;
exiting, in response to a team exiting instruction, the target answering team, and canceling displaying the team building panel; or
displaying, in response to an invitation panel display instruction, an invitation panel, wherein the invitation panel is configured to trigger an invitation for a user to be invited to join the target chat to view the team building card, and the user to be invited is a user selected by a current user in the invitation panel.

11. The method of claim 10, wherein after displaying the current question information to be answered in the team answering interface, the method further comprises:
displaying, in the team answering interface, an answer for the current question information input by a team member in the target answering team.

12. The method of claim 7, wherein the second team answering operation applies on a team building card or team building prompt information corresponding to the target answering team, and the team building prompt information is configured to prompt joining the target answering team.

13. The method of any of claims 1 to 12, wherein after displaying the answering interface, the method further comprises at least one of the following:
displaying first result prompt information in response to an answering operation for the current question information displayed in the answering interface, wherein the first result prompt information is configured to prompt whether a current user answers the question correctly; or
displaying second result prompt information in response to a case that the current user does not execute the answer operation for the current question information within a preset duration, wherein the second result prompt information is configured to prompt that the current user answers the question incorrectly.

14. The method of claim 13, further comprising at least one of the following:
switching, in response to the current user answering the question correctly, to display next question information, or to display success prompt information, wherein the success prompt information is configured to prompt that a current round of answering ends and the current user answers questions successfully; or
displaying, in response to the current user answering the question incorrectly, failure prompt information, or switching a member attribute of the current user in the target answering team from a first member attribute to a second member attribute, wherein the failure prompt information is configured to prompt that the current round of answering ends and the current user answers the questions unsuccessfully.

15. The method of claim 14, wherein after switching the member attribute of the current user in the target answering team from the first member attribute to the second member attribute, the method further comprises at least one of the following:
displaying the success prompt information in response to a case that all team members in the target answering team finish answering questions and an existence of a team member who answers the questions successfully; or
displaying the failure prompt information in response to a case that all the team members in the target answering team finish answering questions and a non-existence of no team member who answers the questions successfully.

16. The method of claim 14, wherein after displaying the success prompt information, the method further comprises at least one of the following:
switching a current interface from the answering interface to the chat interface, and displaying a first expression picture in the chat interface; or
and wherein after displaying the failure prompt information, the method further comprises:
switching the current interface from the answering interface to the chat interface, and displaying a second expression picture in the chat interface.

17. The method of claim 16, wherein the method further comprises at least one of the following:
the first expression picture is configured to move within the chat interface based on a first movement trajectory, and
the second expression picture is configured to move within the chat interface based on a second movement trajectory.

18. The method of claim 14, wherein after displaying the success prompt information, the method further comprises:
displaying obtaining prompt information in the chat interface, wherein the obtaining prompt information is configured to trigger an obtaining of a corresponding virtual resource.

19. A chat interface interaction apparatus, comprising:
a chat interface display module, configured to display a chat interface of a target chat; and
an answering interface display module, configured to display an answering interface in response to an answering operation based on the chat interface, wherein the answering interface is configured to answer a question.

20. An electronic device, comprising:
at least one processor; and
a memory communicatively connected to the at least one processor,
wherein the memory has a computer program stored thereon that, when executed by the at least one processor, causes the at least one processor to perform the chat interface interaction method of any of claims 1 to 18.

21. A computer-readable storage medium, wherein the computer-readable storage medium has computer instructions stored thereon that, when executed by a processor, implement the chat interface interaction method of any of claims 1 to 18.
